# EUROPÄISCHE PATENTANMELDUNG

(11) **EP 2 800 029 A1**
(43) Veröffentlichungstag der Anmeldung: **05.11.2014**
(21) Anmeldenummer: 14166719.6
(22) Anmeldetag: 30.04.2014
(51) Int. Cl.: G06K 19/077

(54) **Armband mit integriertem Datenmodul**

(30) Priorität: 30.04.2013 DE 202013004021 U
(71) Anmelder: Wittmann, Jonas, 92694 Etzenricht (DE); Opitz, Philipp, 84571 Reischach (DE)
(72) Erfinder: Wittmann, Jonas, 92694 Etzenricht (DE); Opitz, Philipp, 84571 Reischach (DE)
(74) Vertreter: Horn Kleimann Waitzhofer

(57) **Zusammenfassung**

Es wird ein aus Kunststoff (K) gefertigtes Armband (1) mit einem integrierten Datenmodul (2) vorgeschlagen, welches einen Speicher (6) zum Speichern von benutzerspezifischen Daten und einen Sender (7) zum drahtlosen Senden der gespeicherten benutzerspezifischen Daten an eine Empfangsvorrichtung aufweist.

## Beschreibung

Die vorliegende Erfindung betrifft ein Armband mit einem integrierten Datenmodul zum Austausch benutzerspezifischer Daten.

Es existieren herkömmliche Vorrichtungen zum Austausch benutzerspezifischer Daten oder Kontaktdaten, z.B. Smartphones oder Notizzettel. Allerdings gibt es eine Vielzahl von situativen Begebenheiten, bei denen die herkömmlichen Vorrichtungen ungeeignet sind. Eine solche Begebenheit ist zum Beispiel der Strand, an dem es unvorteilhaft ist, ein Smartphone mitzuführen.

Es ist daher eine Aufgabe der vorliegenden Erfindung, eine Vorrichtung zu schaffen, mit welcher der Austausch benutzerspezifischer Daten vereinfacht ist.

Demgemäß wird ein Armband mit einem integrierten Datenmodul vorgeschlagen. Das Datenmodul umfasst einen Speicher zum Speichern von benutzerspezifischen Daten und einen Sender zum drahtlosen Senden der gespeicherten benutzerspezifischen Daten an eine Empfangsvorrichtung.

Durch das vorliegende Armband ist der Austausch von benutzerspezifischen Daten stark vereinfacht. Insbesondere kann das Armband durch einfaches Tragen am Arm stets und problemlos mitgeführt werden, z.B. auch am Strand. Flüchtige, jedoch vielversprechende Bekanntschaften können auf technisch sehr einfache Weise gespeichert, ausgetauscht und gepflegt werden.

Der Sender kann derart eingerichtet werden, dass er dauerhaft sendet oder dass er nur getriggert sendet. Bei der ersten Alternative besteht der Vorteil darin, dass sich der Nutzer nicht um das Senden kümmern muss, da es dauerhaft durchgeführt wird. Die zweite Alternative hat hingegen den Vorteil, dass der Nutzer direkt beeinflusst, wann und gegebenenfalls welchen anderen Nutzern oder Personen seine benutzerspezifischen Daten über den Sender mitgeteilt werden.

Das Armband kann als ein flexibles und dehnbares Armband ausgeführt sein, welches der Nutzer einfach über seinen Arm streifen kann. Alternativ oder zusätzlich kann das Armband auch eine Schnalle und korrespondierende Löcher aufweisen.

Die benutzerspezifischen Daten können als Kontaktdaten zur Kontaktierung des Nutzers, als ein Kurzprofil des Nutzers mit Kontaktdaten oder als ein Profil des Nutzers ausgebildet sein. Die benutzerspezifischen Daten können auch als eine digitale Visitenkarte des Nutzers ausgebildet sein. In Ausführungsformen können die benutzerspezifischen Daten auch als eine digitale Identität des Nutzers ausgebildet sein und beispielsweise einen biometrischen Fingerprint umfassen.

Insbesondere ist das Datenmodul derart in dem Armband integriert, dass es geschützt ist, insbesondere vor Umwelteinflüssen, beispielsweise am Strand. Somit hat das vorliegende Armband hinsichtlich seiner Einsatzmöglichkeiten deutliche Vorteile gegenüber einem Smartphone. Ein weiterer Vorteil gegenüber einem Smartphone zur Nutzung des Austausches benutzerspezifischer Daten oder Kontaktdaten liegt darin, dass der Herstellungs- und damit auch der Anschaffungspreis des vorliegenden Armbandes deutlich geringer sind als der eines Smartphone. Des Weiteren hat das vorliegende Armband aufgrund seiner sehr eingeschränkten Funktionalität auf den Austausch von Benutzerdaten einen höheren Integritätsschutz. Insbesondere bei Smartphones ist es möglich, dass der Schutz von Daten aufgrund der umfangreichen Funktionalitäten, zum Beispiel Internet-Browser, von Smartphones gefährdet ist.

In Ausführungsformen ist das Datenmodul vollständig in dem Kunststoff des Armbandes gekapselt. Aufgrund der Kapselung des Datenmoduls in dem Kunststoff des Armbandes ergibt sich eine sehr hohe Belastbarkeit des Produktes Armband. Insbesondere Wasserfestigkeit und Staubschutz können durch die Integration bereitgestellt werden. Auch hierbei bestehen deutliche Vorteile gegenüber einem Smartphone oder einer Smart-Watch.

In Ausführungsformen ist das Datenmodul vollständig in dem Kunststoff des Armbandes wasserdicht und/oder staubdicht gekapselt.

In Ausführungsformen ist das Datenmodul zwischen einem ersten Bandabschnitt und einem zweiten Bandabschnitt gekoppelt, wobei der erste Bandabschnitt und der zweite Bandabschnitt aus Kunststoff sind und mittels einer Schnalle verbindbar sind. Hierbei ist es beispielsweise möglich, ein in dem Kunststoff vergossenes Datenmodul mit einer Vielzahl unterschiedlich farbiger Bänder zu vertreiben. Außerdem ist es hierbei auf einfache und kostengünstige Weise möglich, ein beschädigtes Band zu ersetzen.

In Ausführungsformen weist das Armband eine Auslöseeinheit auf, welche dazu eingerichtet ist, den Sender derart anzusteuern, dass dieser die gespeicherten benutzerspezifischen Daten drahtlos sendet. Hierbei kann der Nutzer konkret steuern, wann und damit auch an welche Person oder Personen er seine benutzerspezifischen Daten senden möchte.

In Ausführungsformen weist die Auslöseeinheit einen in das Armband integrierten Druckknopf zum Bestätigen des Sendens der gespeicherten benutzerspezifischen Daten auf. Der Druckknopf als Ausführungsform der Auslöseeinheit ist von außen leicht zugänglich und technisch einfach in den Kunststoff des Armbandes integrierbar.

In Ausführungsformen umfasst der Sender einen Bluetooth-Sender und/oder einen Infrarot-Sender.

In Ausführungsformen weist das Datenmodul einen Empfänger zum Empfangen von von einer Sendeeinrichtung einer anderen Person drahtlos gesendeten benutzerspezifischen Daten auf.

Durch den Empfänger kann der Nutzer des Armbandes auch benutzerspezifische Daten anderer Personen empfangen und in dem Speicher seines Armbandes speichern. Damit kann der Nutzer des Armbandes benutzerspezifische Daten senden und empfangen und damit eine umfassende Kontaktpflege mittels des Armbandes betreiben.

In Ausführungsformen weist das Datenmodul eine Sende-/Empfangseinheit auf, welche den Sender und den Empfänger integriert und dazu eingerichtet ist, mit der Empfangsvorrichtung einer anderen Person über eine Punkt-zu-Punkt-Verbindung zu kommunizieren. Durch die Möglichkeit der Kommunikation über eine Punkt-zu-Punkt-Verbindung kann der Nutzer konkret steuern, mit welchen anderen Nutzern oder Personen er seine Daten austauschen möchte.

Die Sende-/Empfangseinheit kann auch einen Microcontroller zur Steuerung der Funktionalitäten des Armbandes aufweisen.

In Ausführungsformen hat das Armband eine Schnittstelle zum Verbinden des Datenmoduls mit einem Rechner, mittels welchem das Datenmodul konfigurierbar ist, der Speicher auslesbar ist und der Speicher schreibbar ist.

Durch Verwendung der Schnittstelle kann der Nutzer sein Armband über einen Rechner, einen PC, ein Smartphone oder dergleichen konfigurieren und insbesondere seine Einstellungen treffen. Er kann auch empfangene benutzerspezifische Daten anderer Personen aus dem Speicher des Armbandes auslesen und über seinen Rechner oder sein Smartphone nutzen. Auch kann er seine eigenen benutzerspezifischen Daten durch ein Aktualisieren des Speichers anpassen.

In Ausführungsformen ist die Schnittstelle eine drahtlose Schnittstelle. Zum Beispiel umfasst die drahtlose Schnittstelle eine Bluetooth- Schnittstelle oder eine Infrarot- Schnittstelle.

In Ausführungsformen umfassen die benutzerspezifischen Daten einen Namen des Nutzers und zumindest eine Kontaktierungsform zum Kontaktieren des Nutzers.

Die Kontaktierungsform umfasst beispielsweise eine Einladung zur Verknüpfung in einem sozialen Netzwerk, eine Emailadresse des Nutzers und/oder eine Telefonnummer des Nutzers.

In Ausführungsformen ist das Datenmodul ausschließlich zum Speichern und Austauschen von benutzerspezifischen Daten geeignet. Die Reduzierung der Funktionalität des Datenmoduls auf das Speichern und Austauschen von benutzerspezifischen Daten ermöglicht eine sehr kostengünstige Herstellung des Armbands und eine hohe Sicherheit der benutzerspezifischen Daten, da aufgrund fehlender anderer Funktionalitäten, z.B. wie Internet beim Smartphone, Zugriffsmöglichkeiten auf die benutzerspezifischen Daten nicht gegeben sind. Das Armband kann damit auch als sicheres Massenprodukt angeboten werden.

In Ausführungsformen hat das Armband eine Anzeigeeinrichtung zum Anzeigen eines Ladezustands eines das Datenmodul mit elektrischer Energie versorgenden Akkumulators und/oder zum Anzeigen einer Datenübertragung durch das Datenmodul.

In Ausführungsformen ist die Anzeigeeinrichtung dazu eingerichtet, in einem ersten Zustand ein Senden von Daten und in einem zweiten Zustand ein Empfangen von Daten anzuzeigen. Durch die Anzeigeeinrichtung ist dem Nutzer eine Möglichkeit gegeben, zu erkennen, wann sein Armband sendet bzw. wann es empfängt.

In Ausführungsformen hat das Armband eine Photovoltaikeinrichtung zum Aufladen eines das Datenmodul mit elektrischer Energie versorgenden Akkumulators.

Durch den Einsatz der Photovoltaikeinrichtung kann das Armband hinsichtlich seiner Energieversorgung autark betrieben werden.

Der Speicher des Armbandes ist insbesondere als ein integrierter Datenspeicher, beispielsweise als ein EPROM- oder EEPROM-Speicher, ausgebildet. Der Speicher kann auch als Knopfzelle oder SD-Speicherchip ausgebildet sein.

Die jeweilige Einheit, zum Beispiel Auslöseeinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weitere mögliche Implementierungen oder Varianten des Armbands umfassen auch nicht explizit genannte Kombinationen von zuvor oder im Folgenden bezüglich der Ausführungsbeispiele beschriebenen Merkmale. Dabei wird der Fachmann auch Einzelaspekte als Verbesserung oder Ergänzungen zu der jeweiligen Grundform hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

Dabei zeigen:
- Fig. 1:: ein erstes Ausführungsbeispiel eines Armbands mit einem integrierten Datenmodul;
- Fig. 2:: eine schematische Ansicht eines ersten Ausführungsbeispiels eines Datenmoduls des Armbands nach Fig. 1;
- Fig. 3:: eine schematische Ansicht eines zweiten Ausführungsbeispiels eines Datenmoduls des Armbands nach Fig. 1;
- Fig. 4:: eine schematische Ansicht eines dritten Ausführungsbeispiels eines Datenmoduls des Armbands nach Fig. 1; und
- Fig. 5:: ein zweites Ausführungsbeispiel eines Armbands mit einem integrierten Datenmodul.

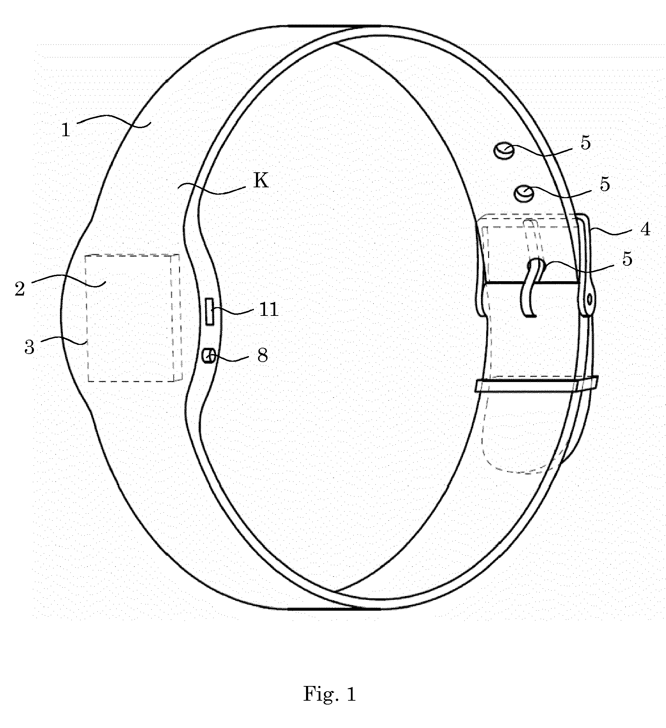

In Fig. 1 ist ein erstes Ausführungsbeispiel eines Armbands 1 mit einem integrierten Datenmodul 2 dargestellt.

Das Armband 1 ist aus einem Kunststoff K gefertigt. Das Datenmodul 2 ist in dem Kunststoff K integriert, insbesondere gekapselt. Vorzugsweise ist das Datenmodul 2 in dem Kunststoff K des Armbandes 1 wasserdicht und staubdicht gekapselt.

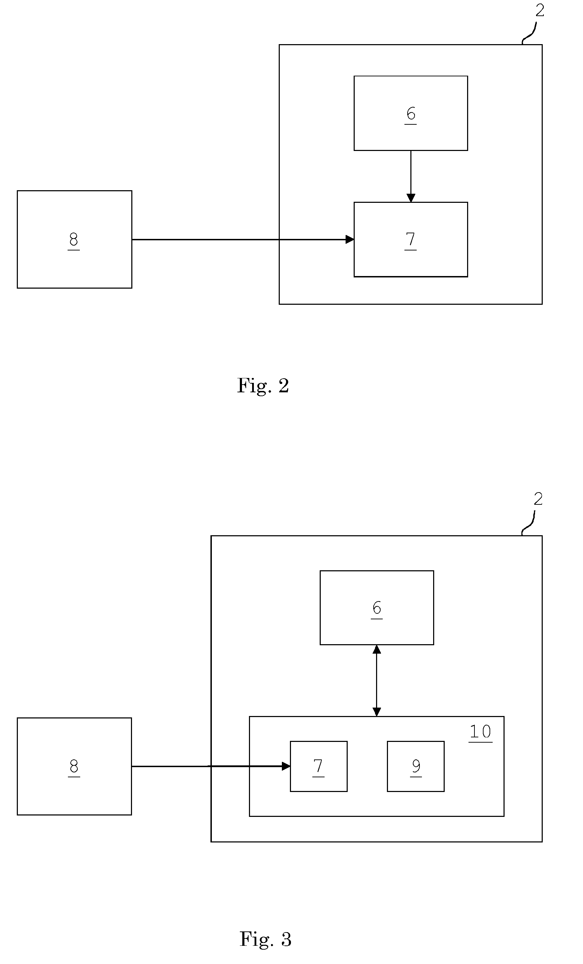

In Fig. 1 ist das integrierte Datenmodul 2 nur schematisch angedeutet. Insbesondere zeigen die strichlierten Linien für das Datenmodul 2 nur das Gehäuse 3 dessen. Ausführungsbeispiele für die Funktionalität des Datenmoduls 2 sind in den Fig. 2 bis 4 angegeben.

Hierzu ist in Fig. 2 ist eine schematische Ansicht eines ersten Ausführungsbeispiels eines Datenmoduls 2 des Armbands 1 nach Fig. 1 dargestellt. Das Datenmodul 2 der Fig. 2 hat einen Speicher 6 und einen Sender 7. Der Speicher 6 ist dazu eingerichtet, benutzerspezifische Daten des Nutzers des Armbandes 1 zu speichern. Der Sender 7 ist dazu eingerichtet, die gespeicherten benutzerspezifischen Daten an eine externe Empfangsvorrichtung einer anderen Person zu senden.

Das Armband 1 der Fig. 1 kann eine Schnalle 4 und entsprechende Löcher 5 zur Befestigung des Armbandes 1 am Arm des Nutzers aufweisen. Alternativ kann das Armband 1 auch als ein elastisches Armband ausgebildet sein, welches der Nutzer über seinen Arm streifen kann.

Das Senden der benutzerspezifischen Daten kann durch eine Auslöseeinheit 8 getriggert werden. Die Auslöseeinheit 8 kann extern zu dem Datenmodul 2 angeordnet sein. Die Auslöseeinheit 8 ist dazu eingerichtet, den Sender 7 derart anzusteuern, dass dieser die gespeicherten benutzerspezifischen Daten drahtlos, beispielsweise als Broadcast, sendet.

Die Fig. 1 zeigt eine beispielhafte Ausgestaltung einer solchen Auslöseeinheit 8, nämlich als einen in dem Armband 1 integrierten Druckknopf. Der Druckknopf 8 ist dazu eingerichtet, das Senden der gespeicherten benutzerspezifischen Daten durch den Sender 7 zu triggern. Der Sender 7 kann ein Bluetooth-Sender sein. Der Sender 7 kann aber auch als ein Infrarotsender ausgebildet sein.

Die benutzerspezifischen Daten umfassen vorzugsweise einen Namen des Nutzers und zumindest eine Kontaktierungsform zum Kontaktieren des Nutzers durch den Empfänger der benutzerspezifischen Daten. Die Kontaktierungsform kann beispielsweise eine Einladung zur Verknüpfung in einem sozialen Netzwerk, eine Email-Adresse des Nutzers oder eine Telefonnummer des Nutzers umfassen.

In Ausführungsformen ist das Datenmodul 2 ausschließlich zum Speichern und Austauschen von benutzerspezifischen Daten eingerichtet und geeignet. Folglich ist das Armband 1 dann ausschließlich auf diese Funktion des Speicherns und Austauschens von benutzerspezifischen Daten reduziert, so dass das Armband 1 sehr kostengünstig hergestellt werden kann.

In der Fig. 3 ist eine schematische Ansicht eines zweiten Ausführungsbeispiels eines Datenmoduls 2 des Armbands 1 nach Fig. 1 dargestellt.

Das Datenmodul 2 der Fig. 3 umfasst einen Speicher 6 zum Speichern der benutzerspezifischen Daten und eine Sende-/Empfangseinrichtung 10. Die Sende-/ Empfangseinrichtung 10 integriert den Sender 7 sowie einen Empfänger 9. Der Empfänger 9 ist dazu eingerichtet, von einer externen Sende-/Empfangseinrichtung drahtlos gesendete, benutzerspezifische Daten einer anderen Person zu empfangen. Die Sende-/Empfangseinheit 10 ist insbesondere dazu eingerichtet, mit der externen Sende-/Empfangseinrichtung eine Punkt-zu-Punkt-Verbindung aufzubauen und über diese zu kommunizieren. Folglich ist die Sende-/Empfangseinheit 10 dazu eingerichtet, eine Unicast-Verbindung mit einer bestimmten Sende-/Empfangseinrichtung aufzubauen.

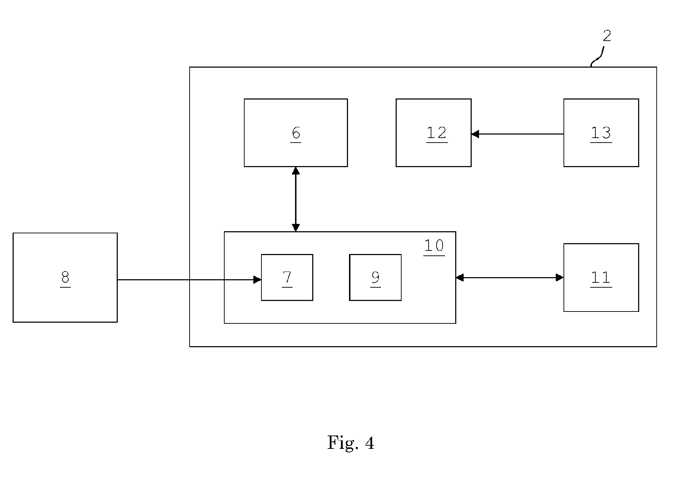

Fig. 4 zeigt eine schematische Ansicht eines dritten Ausführungsbeispiels eines Datenmoduls 2 des Armbandes 1 nach Fig. 1. Das dritte Ausführungsbeispiel des Datenmoduls 2 der Fig. 4 basiert auf dem zweiten Ausführungsbeispiel der Fig. 3 und umfasst zusätzlich eine Schnittstelle 11, einen Akkumulator 12 und eine Photovoltaikeinrichtung 13. Die Schnittstelle 11 ist zum Verbinden des Datenmoduls 2 mit einem Rechner, einem Smartphone oder dergleichen eingerichtet. Über die Schnittstelle 11 ist das Datenmodul 2 konfigurierbar. Des Weiteren ist der Speicher 6 des Datenmoduls 2 über die Schnittstelle 11 auslesbar und beschreibbar. Folglich können über die Schnittstelle 11 aus dem Speicher 6 benutzerspezifische Daten eingelesen, aber auch ausgelesen werden. Die Schnittstelle 11 ist beispielsweise eine drahtlose Schnittstelle, insbesondere eine Bluetooth-Schnittstelle oder eine Infrarot-Schnittstelle. In Ausführungsformen kann die Schnittstelle 11 auch als eine USB-Schnittstelle ausgebildet sein.

Der Akkumulator 12 ist dazu eingerichtet, das Datenmodul 2 mit der notwendigen elektrischen Energie zu versorgen. Die Photovoltaikeinrichtung 13 ist dazu eingerichtet, den Akkumulator 12 aufzuladen. Ferner kann eine Anzeigeeinrichtung vorgesehen sein (nicht gezeigt), welche in einem ersten Zustand des Armbands 1 ein Senden von Daten und in einem zweiten Zustand des Armbands 1 ein Empfangen von Daten anzeigt. Die Anzeigeeinrichtung kann ferner dazu ausgestaltet sein, den Ladezustand des Akkumulators 12 anzuzeigen.

Insbesondere sind alle in den Fig. 2 - 4 dargestellten Einheiten (Funktionsblöcke) in dem Gehäuse 3 der Fig. 1 angeordnet.

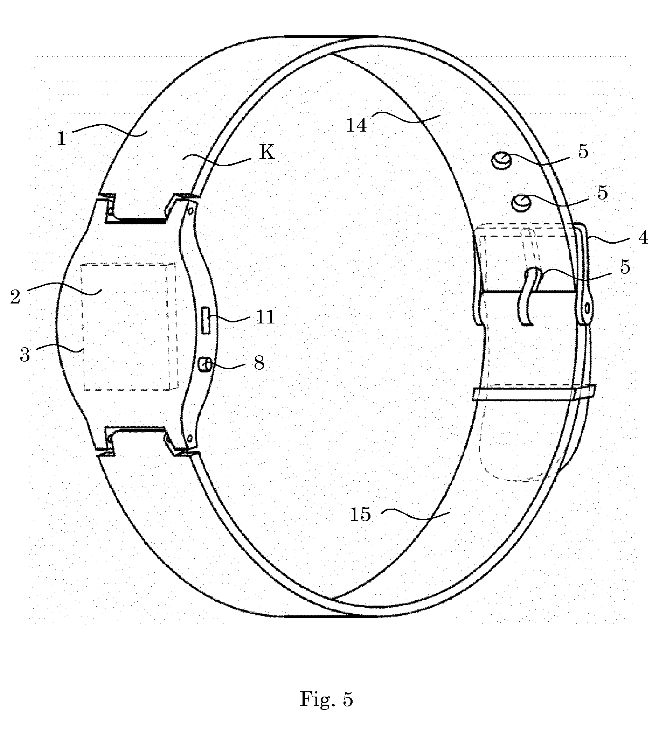

In Fig. 5 ist ein zweites Ausführungsbeispiel eines Armbands 1 mit einem integrierten Datenmodul 2 dargestellt. Das integrierte Datenmodul 2 kann gemäß einer der Ausführungsformen der Fig. 2 bis 4 ausgebildet sein. Das Armband 1 der Fig. 5 unterscheidet sich von dem ersten Ausführungsbeispiel des Armbands 1 nach Fig. 1 dahingehend, dass dieses einen ersten Bandabschnitt 14 und einen zweiten Bandabschnitt 15 aufweist, welche das in dem Kunststoff K vergossene Datenmodul 2 koppeln. Damit kann ein einziges in Kunststoff K vergossenes Datenmodul 2 mit einer Vielzahl unterschiedlicher Bänder 14, 15 genutzt werden. Beispielsweise ist es möglich, ein in einem Kunststoff K vergossenes Datenmodul 2 mit einer Vielzahl unterschiedlich farbiger Bänder 14, 15 zu vertreiben.

Obwohl die Erfindung anhand von speziellen Ausführungsbeispielen erläutert wurde, ist sie nicht darauf beschränkt sondern vielfältig modifizierbar. Es ist insbesondere denkbar, das Armband aus einem anderen Material zu bilden.

### Verwendete Bezugszeichen:

- 1: Armband
- 2: Datenmodul
- 3: Gehäuse des Datenmoduls
- 4: Schnalle
- 5: Loch
- 6: Speicher
- 7: Sender
- 8: Auslöseeinheit, z.B. Druckknopf
- 9: Empfänger
- 10: Sende-/Empfangseinheit
- 11: Schnittstelle
- 12: Akkumulator
- 13: Photovoltaikeinrichtung
- 14: erster Bandabschnitt
- 15: zweiter Bandabschnitt
- K: Kunststoff

## Patentansprüche

1. Ein aus Kunststoff (K) gefertigtes Armband (1) mit einem integrierten Datenmodul (2), welches einen Speicher (6) zum Speichern von benutzerspezifischen Daten und einen Sender (7) zum drahtlosen Senden der gespeicherten benutzerspezifischen Daten an eine Empfangsvorrichtung aufweist.

2. Armband nach Anspruch 1,
**dadurch gekennzeichnet,**
**dass** das Datenmodul (2) vollständig in dem Kunststoff (K) des Armbandes (1) gekapselt ist, insbesondere wasserdicht und staubdicht gekapselt ist.

3. Armband nach Anspruch 1,
**dadurch gekennzeichnet,**
**dass** das Datenmodul (2) zwischen einem ersten Bandabschnitt (14) und einem zweiten Bandabschnitt (15) gekoppelt ist, wobei der erste Bandabschnitt (14) und der zweite Bandabschnitt (15) aus Kunststoff (K) sind und mittels einer Schnalle (4) verbindbar sind.

4. Armband nach einem der Ansprüche 1 bis 3,
**gekennzeichnet durch**
eine Auslöseeinheit (8), welche dazu eingerichtet ist, den Sender (7) derart anzusteuern, dass dieser die gespeicherten benutzerspezifischen Daten drahtlos sendet.

5. Armband nach Anspruch 4,
**dadurch gekennzeichnet,**
**dass** die Auslöseeinheit (8) einen in das Armband (1) integrierten Druckknopf zum Bestätigen des Sendens der gespeicherten benutzerspezifischen Daten aufweist.

6. Armband nach einem der Ansprüche 1 bis 4,
**dadurch gekennzeichnet,**
**dass** der Sender (7) einen Bluetooth-Sender und/oder einen Infrarot-Sender umfasst.

7. Armband nach einem der Ansprüche 1 bis 4,
**dadurch gekennzeichnet,**
**dass** das Datenmodul (2) einen Empfänger (9) zum Empfangen von von einer Sendeeinrichtung drahtlos gesendeten benutzerspezifischen Daten aufweist.

8. Armband nach einem der Ansprüche 7,
**dadurch gekennzeichnet,**
**dass** das Datenmodul (2) eine Sende-/Empfangseinheit (10) aufweist, welche den Sender (7) und den Empfänger (9) integriert und dazu eingerichtet ist, mit der Empfangsvorrichtung über eine Punkt-zu-Punkt-Verbindung zu kommunizieren.

9. Armband nach einem der Ansprüche 1 bis 8,
**gekennzeichnet durch**
eine Schnittstelle (11) zum Verbinden des Datenmoduls (2) mit einem Rechner, mittels welchem das Datenmodul (2) konfigurierbar ist, der Speicher (6) auslesbar ist und der Speicher (6) beschreibbar ist.

10. Armband nach einem der Ansprüche 1 bis 9,
**dadurch gekennzeichnet,**
**dass** die benutzerspezifischen Daten einen Namen des Nutzers und zumindest eine Kontaktierungsform zum Kontaktieren des Nutzers umfassen.

11. Armband nach einem der Ansprüche 1 bis 10,
**dadurch gekennzeichnet,**
**dass** die Kontaktierungsform eine Einladung zur Verknüpfung in einem sozialen Netzwerk, eine Emailadresse des Nutzers und/oder eine Telefonnummer des Nutzers umfasst.

12. Armband nach einem der Ansprüche 1 bis 11,
**dadurch gekennzeichnet,**
**dass** das Datenmodul (2) ausschließlich zum Speichern und Austauschen von benutzerspezifischen Daten geeignet ist.

13. Armband nach einem der Ansprüche 1 bis 12,
**gekennzeichnet durch**
eine Anzeigeeinrichtung zum Anzeigen eines Ladezustands eines das Datenmodul (2) mit elektrischer Energie versorgenden Akkumulators (12) und/oder zum Anzeigen einer Datenübertragung **durch** das Datenmodul (2).

14. Armband nach Anspruch 13,
**dadurch gekennzeichnet,**
**dass** die Anzeigeeinrichtung dazu eingerichtet ist, in einem ersten Zustand ein Senden von Daten und in einem zweiten Zustand ein Empfangen von Daten anzuzeigen.

15. Armband nach einem der Ansprüche 1 bis 14,
**gekennzeichnet durch**
eine Photovoltaikeinrichtung (13) zum Aufladen eines das Datenmodul (2) mit elektrischer Energie versorgenden Akkumulators (12).
